(19)

Europäisches Patentamt
European Patent Office
Office européen des brevets

(11) **EP 3 441 907 A1**

(12) **EUROPEAN PATENT APPLICATION**

(43) Date of publication:
**13.02.2019 Bulletin 2019/07**

(51) Int Cl.:
**G06K 9/00** (2006.01)

(21) Application number: **18166083.8**

(22) Date of filing: **06.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.08.2017 CN 201710680021**

(71) Applicant: **Cal-Comp Big Data, Inc.**
**New Taipei City 22201 (TW)**

(72) Inventors:
• **SHEN, Shyh-Yong**
  **New Taipei City 22201, (TW)**
• **CHI, Min-Chang**
  **New Taipei City 22201 (TW)**
• **GOSNO, Eric Budiman**
  **New Taipei City 22201 (TW)**
• **WANG, Ching-Wei**
  **New Taipei City 22201 (TW)**

(74) Representative: **Haseltine Lake LLP**
**Redcliff Quay**
**120 Redcliff Street**
**Bristol BS1 6HU (GB)**

(54) **FACE SIMILARITY EVALUATION METHOD AND ELECTRONIC DEVICE**

(57)     A face similarity evaluation method and an electronic device are provided. The method includes: obtaining a first image; obtaining a plurality of feature factors respectively corresponding to the first image and at least one second image; obtaining an overall similarity score corresponding to the at least one second image based on the feature factors respectively corresponding to the first image and at least one second image, and generating an evaluation result based on the overall similarity score corresponding to the at least one second image; and outputting an inform message based on the evaluation result.

FIG. 9

**Description**

BACKGROUND OF THE INVENTION

Field of the Invention

The invention relates to a face recognition technique, and particularly relates to a face similarity evaluation method based on face recognition and an electronic device.

Description of Related Art

The current face recognition technique may identify multiple feature points in a face image, and users may learn their own face information based on the current face recognition technique. However, regarding the current technique and related products in the market, the users cannot know similarities between their looks and other people or celebrities. Therefore, how to determine the similarities between the user looks and other people or celebrities to develop more practical and interesting products is a subject to be develop by related technical staff of the field.

SUMMARY OF THE INVENTION

The invention is directed to a face similarity evaluation method and an electronic device, which are capable to recognize similarity of two face images by obtaining feature factors of each area of the faces, such that a user learns the similarity between his own look and other people or celebrities.
An embodiment of the invention provides a face similarity evaluation method including: obtaining a first image; obtaining a plurality of feature factors respectively corresponding to the first image and at least one second image; obtaining an overall similarity score corresponding to the at least one second image based on the feature factors respectively corresponding to the first image and the at least one second image, and generating an evaluation result based on the overall similarity score corresponding to the at least one second image; and outputting an inform message based on the evaluation result.
An embodiment of the invention provides an electronic device including a storage unit and a processor. The processor is coupled to the storage unit, and accesses and executes a plurality of modules stored in the storage unit. The modules include an image obtaining module, a feature factor obtaining module, a comparison module and an output module. The image obtaining module obtains a first image. The feature factor obtaining module obtains a plurality of feature factors respectively corresponding to the first image and at least one second image. The comparison module obtains an overall similarity score corresponding to the at least one second image based on the feature factors respectively corresponding to the first image and the at least one second image, and generates an evaluation result based on the overall similarity score corresponding to the at least one second image. The output module outputs an inform message based on the evaluation result.
According to the above description, in the invention, a difference of each of the feature factors is obtained according to the feature factors respectively corresponding to two images, and an area similarity score corresponding to each area of the face is obtained according to the difference of each of the feature factors, so as to obtain the overall similarity score corresponding to the face image. In this way, the user learns the similarity between his own look and other people or celebrities.
In order to make the aforementioned and other features and advantages of the invention comprehensible, several exemplary embodiments accompanied with figures are described in detail below.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram of an electronic device according to an embodiment of the invention.
FIGs. 2A and 2B are schematic diagrams of a face similarity evaluation method according to an embodiment of the invention.
FIG. 3 is a schematic diagram of areas in a face image according to an embodiment of the invention.
FIGs. 4A and 4B are schematic diagrams of feature factors of an eyebrow area according to an embodiment of the invention.
FIGs. 5A and 5B are schematic diagrams of feature factors of an eye area according to an embodiment of the invention.

FIG. 6 is a schematic diagram of feature factors of a nose area according to an embodiment of the invention.

FIG. 7 is a schematic diagram of feature factors of a lip area according to an embodiment of the invention.

FIG. 8 is a schematic diagram of feature factors of a face area according to an embodiment of the invention.

FIG. 9 is a schematic diagram of a face similarity evaluation method according to another embodiment of the invention.

DESCRIPTION OF EMBODIMENTS

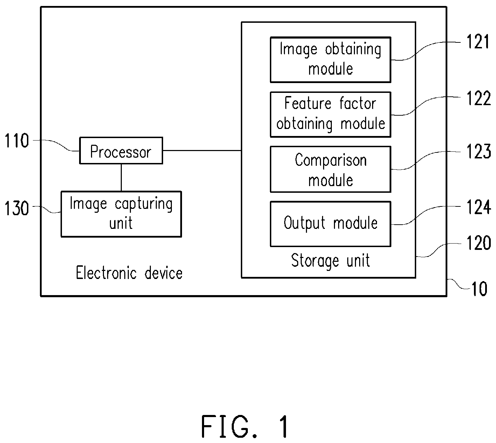

FIG. 1 is a schematic diagram of an electronic device according to an embodiment of the invention.

Referring to FIG. 1, the electronic device 10 of the present embodiment at least includes a processor 110 and a storage unit 120, where the processor 110 is coupled to the storage unit 120. Moreover, in an embodiment, the electronic device 10 further includes an image capturing unit 130, and the processor 110 is coupled to the image capturing unit 130. The electronic device 10 of the present embodiment may be disposed on a mirror of a dressing table, and while the user looks at the mirror, the electronic device 10 may capture and analyze a face image of the user, and provide feedback information (for example, a face similarity evaluation result) by using a display (not shown) disposed behind the mirror. It should be noted that in other embodiments, the electronic device 10 may be an electronic product such as a smart phone, a tablet personal computer (PC), a desktop PC, etc., or a portable mirror box combined with a portable mirror.

The processor 110 may be a central processing unit (CPU), a microprocessor, a digital signal processor, a programmable controller, an application specific integrated circuits (ASIC), a programmable logic device (PLD) or other device having a data computation function.

The storage unit 120 may be any type of a fixed or movable random access memory (RAM), a read-only memory (ROM), a flash memory, or a similar device or a combination of the above devices. In the present embodiment, the storage unit 120 is used for recording an image obtaining module 121, a feature factor obtaining module 122, a comparison module 123 and an output module 124. In other embodiments, the storage unit 120 may also be used for storing a database, and the electronic device 10 may obtain a stored image and a feature factor corresponding to the image from the database. The modules are, for example, computer programs stored in the storage unit 120, and the computer programs may be loaded to the processor 110, and the processor 110 accordingly executes a function of the face similarity evaluation method of the invention.

The image capturing unit 130 may be a camera equipped with a charge coupled device (CCD), a complementary metal-oxide semiconductor (CMOS) device or other types of photo-sensing element, and may be used for capturing a current face image of the user. Detailed steps of the face similarity evaluation method are described below with reference of an embodiment.

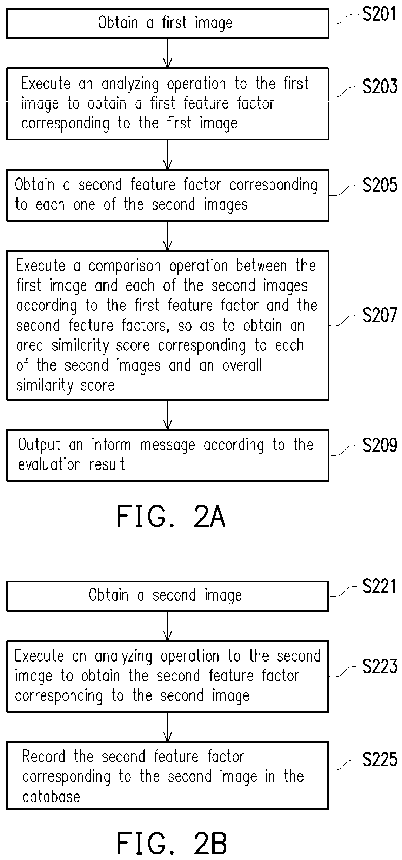

FIGs. 2A and 2B are schematic diagrams of a face similarity evaluation method according to an embodiment of the invention. Referring to FIG. 1, FIG. 2A and FIG. 2B, the face similarity evaluation method of the present embodiment is adapted to the electronic device 10 of FIG. 1, and detailed steps of the face similarity evaluation method are described below with reference of various components of the electronic device 10 of FIG. 1. Moreover, for simplicity's sake, in the following embodiment, a first image represents a face image of one user, and a second image represents a face image different to the first image.

Referring to FIG. 2A, first, in step S201, the processor 110 executes the image obtaining module 121 to obtain the first image. In the present embodiment, when the user uses the electronic device 10, the processor 110 executes the image obtaining module 121 to control the image capturing unit 130 to capture the face image of the user to produce the first image. However, in other embodiments, the image obtaining module 121 may also obtain the user's face image to be evaluated from a database stored in the storage unit 130 or from other electronic device to serve as the first image.

Then, in step S203, the processor 110 executes the feature factor obtaining module 122 to perform an analyzing operation to the first image to obtain a first feature factor corresponding to the first image. In the present embodiment, analyzing operation performed by the feature factor obtaining module 122 includes calculating the first feature factor corresponding to the first image according to a plurality of feature points of the first image. However, in other embodiments, the the feature factor obtaining module 122 may directly obtain the pre-stored first feature factor corresponding to the first image from the database stored in the storage unit 130 or from the other electronic device.

Moreover, in step S205, the processor 110 executes the feature factor obtaining module 122 to obtain a second feature factor corresponding to each one of a plurality of second images. In the present embodiment, the feature factor obtaining module 122 may obtain the second feature factor corresponding to each of the second images from the database stored in the storage unit 130. The second feature factor corresponding to each of the second images may be pre-recorded in the database according to the steps of FIG. 2B. Referring to FIG. 2B, in step S221, the processor 110 executes the image obtaining module 121 to obtain the second image. Then, in step S223, the processor 110 executes the feature factor obtaining module 122 to execute an analyzing operation to the second image to obtain the second feature factor corresponding to the second image. Then, in step S225, the processor 110 records the second feature factor corresponding to the second image in the database. The database is stored in the storage unit 130. In this way, the electronic device 10 may pre-store a plurality of the second images and the second feature factors corresponding to each of the second images for the user of the subsequent face similarity evaluation.

In the present embodiment, the face image (for example, the first image and the second image) may include a plurality of areas. To be specific, the processor 110 may execute a face detection system using a Dlib database (Dlib face landmark) to detect and analyze 194 feature points of the face image. In other embodiments, only 119 face feature points may be analyzed, or the feature points in the face image may be obtained by using other algorithms for detecting the face feature points. In this way, a plurality of areas of the face image may be identified based on the obtained feature points. Moreover, the processor 110 may further define a coordinate system, and assign each of the feature points with coordinates, for example, (x, y). In the following embodiment, a horizontal line refers to a straight line parallel to an x-axis, and a vertical line refers to a straight line parallel to a y-axis. Then, the feature factor obtaining module 122 may perform the analyzing operation to the face image to obtain the feature factor of each area according to the feature points of each area. Alternatively, the feature factor obtaining module 122 may also directly obtain the feature factor corresponding to each of the areas in a certain face image from a database. An embodiment is provided below to describe the feature factor of each area.

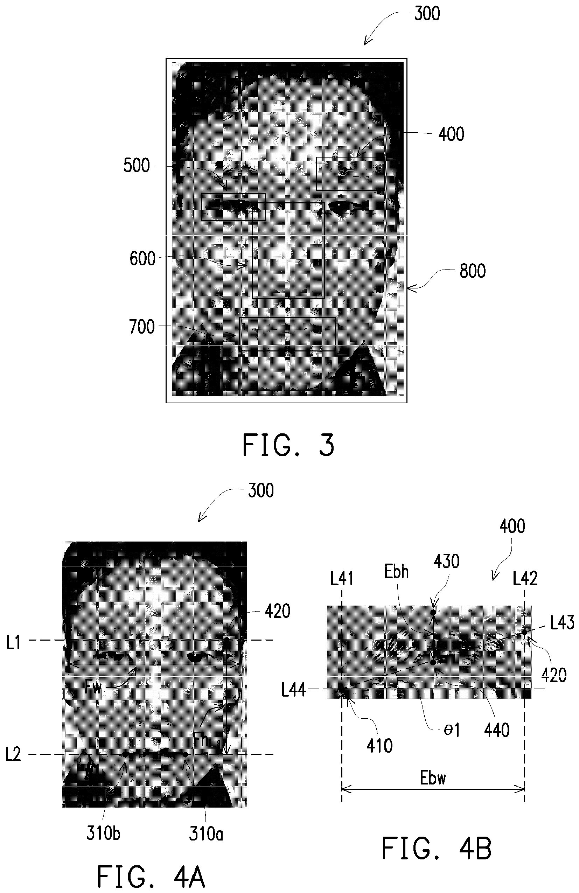

FIG. 3 is a schematic diagram of areas in a face image according to an embodiment of the invention. For simplicity's sake, in the following embodiment, a situation that the feature factor obtaining module 122 performs the analyzing operation on the first image to obtain the feature factor of the first image is taken as an example for description. However, the invention is not limited thereto, and the feature factor obtaining module 122 may also perform the analyzing operation on each of the second images to obtain other feature factors.

Referring to FIG. 3, the plurality of areas of the first image 300 may include an eyebrow area 400, an eye area 500, a nose area 600 and a lip area 700. In an embodiment, the first image 300 may further include a face area 800 corresponding to the whole face. However, the invention is not limited to the aforementioned areas, and in other embodiments, other areas may be defined according to an application requirement. Moreover, in the present embodiment, although one eyebrow is taken as the eyebrow area 400 and one eye is taken as the eye area 500, in an actual practice, two eyebrows may be taken as the eyebrow area 400 and two eyes may be taken as the eye area 500. The feature factor obtaining module 122 may execute the analyzing operation to the first image 300 to obtain one or a plurality of feature factors of each area according to a plurality of feature points belonging to each area.

FIGs. 4A and 4B are schematic diagrams of feature factors of the eyebrow area according to an embodiment of the invention. In the following embodiments, each endpoint refers to a feature point detected by the face detection system, or a feature point additionally defined by the feature factor obtaining module 122 according to the feature points of each part.

Referring to FIG. 4A, the feature factor obtaining module 122 obtains a face width Fw and a face height Fh of the first image 300. To be specific, the feature factor obtaining module 122 takes a distance of a horizontal line aligned with lower edges of the eyes and located between two side edges of two cheeks as the face width Fw. Moreover, the feature factor obtaining module 122 takes a vertical distance between a horizontal line L1 passing through an endpoint 420 representing an eyebrow tail and a horizontal line L2 passing through an endpoint 310a representing a mouth corner as the face height Fh. However, since a general face image includes two eyebrow tails and two mouth corners, in other embodiments, the endpoint representing the eyebrow tail may be any one of the endpoints of the two eyebrow tails, and the endpoint representing the mouth corner may be any one of the endpoints of the two mouth corners.

In an embodiment, the horizontal line L1 used for calculating the face height Fh may also be located at a height average of two endpoints of two eyebrow tails, and the horizontal line L2 is, for example, located at a height average of two endpoints 310a and 310b of two mouth corners, and a vertical distance between the horizontal line L1 and the horizontal line L2 is taken as the face height Fh.

Referring to FIG. 4B, the feature factor obtaining module 122 obtains an eyebrow width EBw and an eyebrow height EBh. To be specific, the feature factor obtaining module 122 takes a distance between a vertical line L41 passing through an endpoint 410 representing an eyebrow head and a vertical line L42 passing through an endpoint 420 representing the eyebrow tail as the eyebrow width EBw. The feature factor obtaining module 122 further takes a vertical distance between an endpoint 430 and an endpoint 440 of the eyebrow as the eyebrow height EBh. In an embodiment, a straight line simultaneously passing through the endpoint 430 and the endpoint 440 may be a vertical line parallel to the vertical line L41 and the vertical line L42. Moreover, a horizontal distance between the endpoint 430 and the vertical line L41 may be the same with a horizontal distance between the endpoint 430 and the vertical line L42.

Moreover, the feature factor obtaining module 122 may further obtain an eyebrow angle. The eyebrow angle may refer to an included angle θ1 between a reference line L43 and a horizontal line L44. The reference line L43 refers to a straight line simultaneously passing through the endpoint 410 and the endpoint 420, and the horizontal line L44 refers to a horizontal line passing through the endpoint 410. Although, in the present embodiment, the eyebrow angle is obtained according to the feature points of one eyebrow, in other embodiments, the eyebrow angle may also be obtained according to the feature points of the two eyebrows. For example, the feature factor obtaining module 122 may obtain two eyebrow angles of the two eyebrows in the first image 300 according to the aforementioned method, and takes an average of the two obtained eyebrow angles as the eyebrow angle of the first image 300.

Then, the feature factor obtaining module 122 may obtain a plurality of feature factors corresponding to the eyebrow area 400 according to the face width Fw, the face height Fh, the eyebrow width EBw, the eyebrow height EBh and the eyebrow angle (for example, the angle $\theta 1$). For example, the feature factor obtaining module 122 calculates a plurality of values such as a ratio between the eyebrow width EBw and the eyebrow height EBh, a tangent value of the eyebrow angle, a ratio between the eyebrow width EBw and a half of the face width Fw, a ratio between the eyebrow height EBh and the face height Fh, etc. to serve as the feature factors corresponding to the eyebrow area 400.

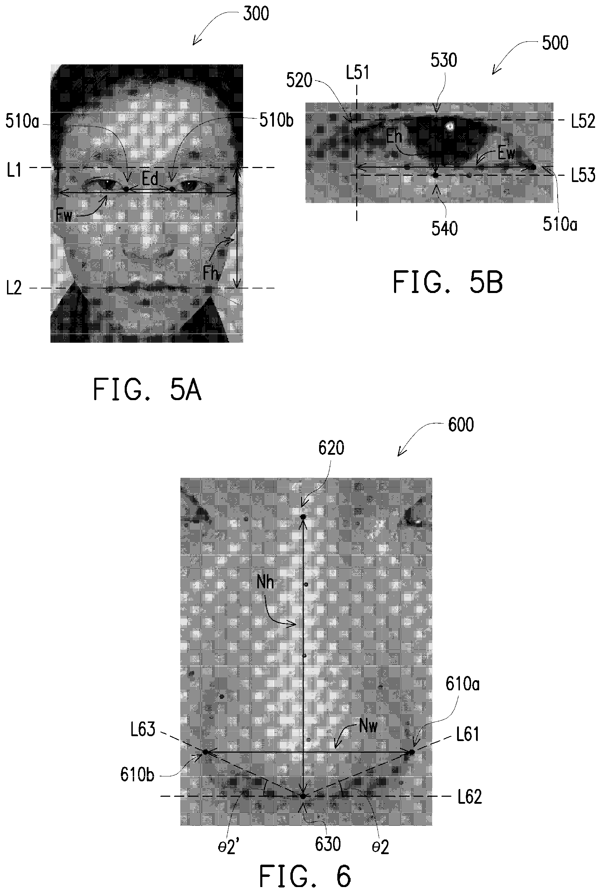

FIGs. 5A and 5B are schematic diagrams of feature factors of an eye area according to an embodiment of the invention.

Referring to FIG. 5A, the feature factor obtaining module 122 obtains an eye distance Ed between the two eyes of the first image 300, an eye width Ew and an eye height Eh. In detail, the feature factor obtaining module 122 takes a distance between an endpoint 510a representing an eye inner corner and an endpoint 510b representing another eye inner corner as the eye distance Ed. The feature factor obtaining module 122 takes a horizontal distance between the endpoint 510a representing the eye inner corner and a vertical line L51 passing through an endpoint 520 representing an eye outer corner as the eye width Ew. The feature factor obtaining module 122 takes a vertical distance between a horizontal line L52 passing through an endpoint 530 and a horizontal line L53 passing through an endpoint 540 as the eye height Eh. In an embodiment, the endpoint 530 may be the highest point of an upper edge of the eye, and the endpoint 540 may be the lowest point of a lower edge of the eye. However, since a general face image may include two eyes, in other embodiments, the feature factor obtaining module 122 may obtain the eye width Ew and the eye height Eh of the first image 300 according to the feature points of any one of the two eyes.

Similarly, in an embodiment, the horizontal line L52 used for calculating the eye height Eh may be also be located at a height average of the highest points of the upper edges of the two eyes, and the horizontal line L53 may be also be located at a height average of the lowest points of the lower edges of the two eyes, and the vertical distance between the horizontal line L52 and the horizontal line L53 is taken as the eye height Eh.

Then, the feature factor obtaining module 122 obtains a plurality of feature factors corresponding to the eye area 500 according to the face width Fw, the face height Fh, the eye width Ew, the eye height Eh and the eye distance Ed. For example, the feature factor obtaining module 122 calculates a plurality of values such as a ratio between the eye width Ew and the eye height Eh, a ratio between the eye width Ew and a half of the face width Fw, a ratio between the eye height Eh and the face height Fh, a ratio between the eye distance Ed and the face width Fw, etc. to serve as the feature factors corresponding to the eye area 500.

FIG. 6 is a schematic diagram of feature factors of a nose area according to an embodiment of the invention.

Referring to FIG. 6, the feature factor obtaining module 122 may obtain a nose width Nw and a nose height Nh of the first image 300. To be specific, the feature factor obtaining module 122 takes a distance between an endpoint 610a and an endpoint 610b of the nose as the nose width Nw. The endpoint 610a may be an endpoint located at the rightmost position on the edge of the nose, and the endpoint 610b may be an endpoint located at the leftmost position on the edge of the nose. Moreover, the feature factor obtaining module 122 takes a distance between an endpoint 620 representing a nose bridge and an endpoint representing a nose columella located at the bottom of the nose as the nose height Nh. In an embodiment, the feature factor obtaining module 122 may take a middle point of the two endpoints 510a and 510b representing the eye inner corners as that shown in FIG. 5A as the aforementioned endpoint 620.

Moreover, the feature factor obtaining module 122 may obtain a nose angle. The nose angle refers to an angle $\theta 2$ included between a reference line L61 and a horizontal line L62. The reference line L61 refers to a straight line passing through both of an endpoint 630 and the endpoint 610a, and the horizontal line L62 refers to a horizontal line passing through the endpoint 630. However, in an embodiment, the feature factor obtaining module 122 may also obtain an angle $\theta 2'$ included between the horizontal line L62 and a straight line passing through both of the endpoint 630 and the endpoint 610b, and take an average of the angle $\theta 2$ and the angle $\theta 2'$ as the nose angle.

Then, the feature factor obtaining module 122 obtains a plurality of feature factors corresponding to the nose area 600 according to the face width Fw, the face height Fh, the nose width Nw, the nose height Nh and the nose angle (for example, the angle $\theta 2$). For example, the feature factor obtaining module 122 calculates a plurality of values such as a ratio between the nose width Nw and the nose height Nh, a ratio between the nose height Nh and the face height Fh, a ratio between the nose width Nw and the face width Fw, a tangent value of the nose angle, etc. to serve as the feature factors corresponding to the nose area 600.

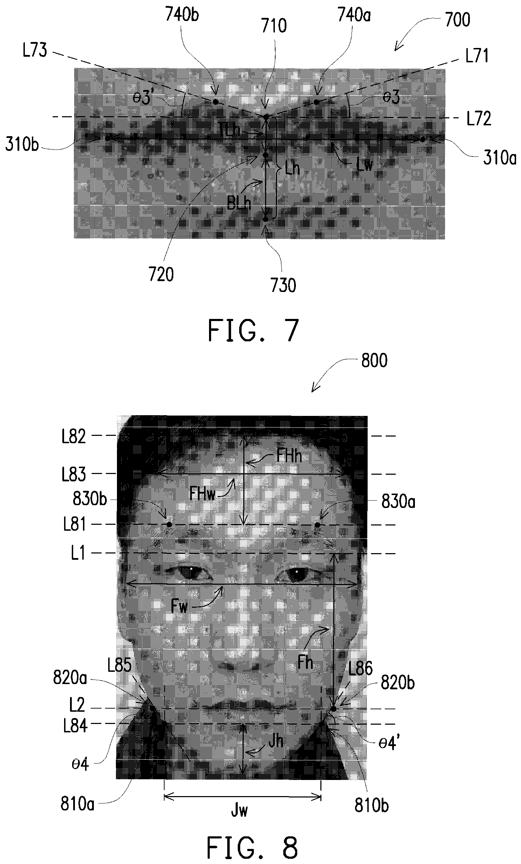

FIG. 7 is a schematic diagram of feature factors of a lip area according to an embodiment of the invention.

Referring to FIG. 7, the feature factor obtaining module 122 may obtain a lip width Lw and a lip height Lh of the first image 300. To be specific, the feature factor obtaining module 122 takes a distance between an endpoint 310a representing a lip corner and an endpoint 310b representing another lip corner as the lip width Lw. Moreover, the feature factor obtaining module 122 obtains a top lip height TLh and a bottom lip height BLh, and takes a sum of the top lip height TLh and the bottom lip height BLh as the lip height Lh. The top lip height TLh may refer to a height of a middle position of the upper lip. In an embodiment, the feature factor obtaining module 122 may identify a vertical line passing through the middle position of the lip according to the endpoint 310a and the endpoint 310b, and identify an endpoint 710, an endpoint 720 and an endpoint 730 on the vertical line pasting through the middle position of the lip. The feature factor obtaining module 122 takes a distance between the endpoint 710 and the endpoint 720 as the top lip height TLh, and takes a distance between the endpoint 720 and the endpoint 730 as the bottom lip height BLh. The endpoint 710 may be an endpoint located on an upper edge of the upper lip on the vertical line passing through the middle position of the lip, the endpoint 720 may be an endpoint located at a boundary of the upper lip and the lower lip on the vertical line passing through the middle position of the lip, and the endpoint 730 may be an endpoint located on a lower edge of the lower lip on the vertical line passing through the middle position of the lip.

Moreover, the feature factor obtaining module 122 may obtain a lip angle. The lip angle refers to an angle $\theta 3$ included between a reference line L71 and a horizontal line L72. The reference line L71 refers to a straight line passing through both of the endpoint 710 and an endpoint 740a representing a lip peak, and the horizontal line L72 refers to a horizontal line passing through the endpoint 730. However, in an embodiment, the feature factor obtaining module 122 may also obtain an angle $\theta 3'$ included between the horizontal line L72 and a straight line L73 passing through both of the endpoint 710 and an endpoint 740b representing a lip peak, and take an average of the angle $\theta 3$ and the angle $\theta 3'$ as the lip angle.

Then, the feature factor obtaining module 122 obtains a plurality of feature factors corresponding to the lip area 700 according to the face width Fw, the lip width Lw, the lip height Lh, the top lip height TLh, the bottom lip height and the lip angle (for example, the angle $\theta 3$). For example, the feature factor obtaining module 122 calculates a plurality of values such as a ratio between the lip width Lw and the lip height Lh, a ratio between the lip width Lw and the face width Fw, a ratio between the top lip height TLh and the bottom lip height BLh, a tangent value of the lip angle, etc. to serve as the feature factors corresponding to the lip area 700.

FIG. 8 is a schematic diagram of feature factors of a face area according to an embodiment of the invention.

Referring to FIG. 8, the feature factor obtaining module 122 may obtain a forehead width FHw and a forehead height FHh of the first image 300. To be specific, the feature factor obtaining module 122 takes a distance between a horizontal line L81 passing through an endpoint 830a representing an eyebrow ridge and a horizontal line L82 passing through a hairline as the forehead height FHh. In an embodiment, the horizontal line L81 may also be a straight line passing through an endpoint 830b representing an eyebrow ridge. Moreover, the feature factor obtaining module 122 may identify another horizontal line L83 parallel to the horizontal line L81, where a vertical distance between the horizontal line L83 and the horizontal line L82 is one third of the forehead height FHh. The feature factor obtaining module 122 may take a distance of the horizontal line L83 between the hairlines at two sides of the forehead as the forehead width FHw.

Moreover, the feature factor obtaining module 122 may further obtain a jaw width Jw and a jaw height Jh. To be specific, the feature factor obtaining module 122 takes a distance between an endpoint 810a and an endpoint 810b as the jaw width Jw. The endpoint 810a and the endpoint 810b refer to endpoints at junctions between a horizontal line L84 passing through a lower edge of the lower lip and both sides of the cheek. The feature factor obtaining module 122 takes a vertical distance between the horizontal line L84 and a lower edge of the jaw as the jaw height Jh.

Moreover, the feature factor obtaining module 122 may further obtain a jaw angle. To be specific, the feature factor obtaining module 122 takes an angle $\theta 4$ included between the horizontal line L84 and a reference line L85 passing through both of the endpoint 810a and an endpoint 820a as the jaw angle. However, in an embodiment, the feature factor obtaining module 122 may also obtain an angle $\theta 4'$ included between the horizontal line L84 and a reference line L86 passing through both of the endpoint 810b and an endpoint 820b, and take an average of the angle $\theta 4$ and the angle $\theta 4'$ as the jaw angle.

Then, the feature factor obtaining module 122 obtains a plurality of feature factors corresponding to the face area 800 according to the face width Fw, the face height Fh, the forehead width FHw, the forehead height FHh, the jaw width Jw, the jaw height Jh and the jaw angle (for example, the angle $\theta 4$). For example, the feature factor obtaining module 122 calculates a sum of the face height Fh, the forehead height FHh and the jaw height Jh to obtain a height of a face profile. Further, the feature factor obtaining module 122 may calculate a plurality of values such as a ratio between the face width Fw and the height of the face profile, a ratio between the forehead width FHw and the face width Fw, a ratio between the forehead height FHh and the face height Fh, a ratio between the jaw width Jw and the face width Fw, a ratio between the jaw height Jh and the face height Fh, a tangent value of the jaw angle, etc. to serve as the feature factors corresponding to the face area 800.

Moreover, the feature factors of the second image may also be obtained according to the method mentioned in the embodiments of FIG. 3 to FIG. 8, and detail thereof is not repeated. Namely, the feature factors (which are also referred to as first feature factors) of the first image and the feature factors (which are also referred to as second feature factors) of the second image are obtained based on the same definition.

Referring to FIG. 2A again, after the step S205 is executed, in step S207, the processor 110 executes the comparison module 124 to execute a comparison operation between the first image and each of the second images according to the first feature factor and the second feature factors, so as to obtain an area similarity score corresponding to each of the second images and an overall similarity score, and generate an evaluation result. In the above step, the comparison module 124 compares the first feature factor of the first image with the second feature factor of each of the second images, and generates the area similarity score corresponding to each of the second images and the overall similarity score according to the comparison result.

To be specific, the comparison module 123 obtains a feature difference parameter *sim(f,i)* of each set of the feature factors of the first image and the second image according to a following equation (1). Each set of the feature factors includes one first feature factor and one second feature factor obtained based on the same definition.

$$Sim(f,i) = 1 - \frac{\| user(f) - celeb_i(f) \|}{user(f)} \qquad (1)$$

In the above equation (1), *user(f)* refers to one first feature factor of the first image, *celeb_i(f)* refers to one second feature factor of each of the second images. Namely, the comparison module 123 may calculate the feature difference parameter corresponding to each set of the feature factors.

Then, the comparison module 123 obtains an area similarity score *AreaSim(i)* corresponding to each area of each of the second images.

$$AreaSim(i) = \frac{\sum_{f \in AreaFactor} w_f \times Sim(f,i)}{\sum_{f \in AreaFactor} w_f} \times 100\% \qquad (2)$$

In the above equation (2), $w_f$ represents a weight value corresponding to each of the feature difference parameters. To be specific, each of the feature difference parameters *sim(f, i)* belonging to each area of the face image may have a corresponding weight value, and a sum of the weight values of all of the feature difference parameters *sim(f, i)* of each area (i.e., $\sum_{f \in AreaFactor} w_f$ in the equation (2)) is complied with a predetermined value. Each of the weight values and the predetermined value of the sum of the corresponding weight values may be adjusted according to an actual application. According to the equation (2), the comparison module 123 obtains a product of each of the feature difference parameters *sim(f, i)* of each area and the corresponding weight value $w_f$, and accordingly obtains a sum of the above products $\sum_{f \in AreaFactor} w_f \times Sim(f,i)$, and calculates a percentage of a ratio between the sum of the products $\sum_{f \in AreaFactor} w_f \times Sim(f,i)$ and a weight summation $\sum_{f \in AreaFactor} w_f$ to obtain the area similarity score *AreaSim(i)*. The area similarity score may represent a similarity degree of a certain area of the faces in two images.

Then, the comparison module 123 obtains an overall similarity score *similarity(Celeb_i)* corresponding to each of the second images according to a following equation (3).

$$similarity(Celeb_i) = \frac{\sum AreaSim(i)}{N(Area)} \qquad (3)$$

According to the equation (3), the comparison module 123 obtains a sum of the area similarity scores $\sum AreaSim(i)$ corresponding to all of the areas, and divides the sum of the area similarity scores $\sum AreaSim(i)$ by the number of all of the areas *N(Area)* to obtain the overall similarity score *similarity(Celeb_i)* corresponding to each of the second images. In other words, the comparison module 123 may obtain an average of all of the area similarity scores corresponding to each of the second images to serve as the overall similarity score corresponding to each of the second images. The overall similarity score may represent a full face similarity degree of two images.

After obtaining the area similarity score and the overall similarity score corresponding to each of the second images through the aforementioned equations (1), (2), and (3), the comparison module 123 determines the second image that is the most similar to the first image as an evaluation result according to the overall similarity score corresponding to each of the second images. In the present embodiment, each area of one first image corresponds to one highest area similarity score, and one first image may correspond to one highest overall similarity score.

Taking the eye area 500 as an example, referring to a following table one, it is assumed that the first image represents a current user image, and a second image (a) represents an image of a celebrity. "Eye W/H", "Eye-Face W", "Eye-Face H" and "Eye distance" respectively represent four feature factors corresponding to the eye area 500 including the ratio between the eye width Ew and the eye height Eh, the ratio between the eye width Ew and a half of the face width Fw, the ratio between the eye height Eh and the face height Fh and the ratio between the eye distance Ed and the face width Fw.

As shown in the following Table. 1, the comparison module 123 respectively calculates the feature difference parameters $sim(f,i)$ of four feature factors corresponding to the eye area between the first image and the second image (a) to be 0.7, 0.93, 0.89 and 0.96 according to the above equation (1). Then, the comparison module 123 obtains the area similarity score corresponding to the eye area of the second image (a) to be 85% according to the above equation (2).

Table. 1

| Feature factor | Weight value | First image | Second image (a) | Sim (f,i) |
|---|---|---|---|---|
| Eye W/H | 0.35 | 3.0 | 3.9 | 0.7 |
| Eye-Face W | 0.25 | 0.43 | 0.46 | 0.93 |
| Eye-Face H | 0.15 | 0.09 | 0.08 | 0.89 |
| Eye Distance | 0.25 | 0.28 | 0.27 | 0.96 |
| AreaSim (i) | 85% | | | |

Similarly, the comparison module 123 further compares the first image with other second images to obtain the area similarity scores corresponding to the other second images. For example, the comparison module 123 obtains the area similarity score of the eye area of another second image (b) to be 93%, and the area similarity score of the eye area of the other second image (c) to be 89%. Therefore, regarding the eye area, the comparison module 123 determines that the second image (b) corresponds to the highest area similarity score, and generates an evaluation result representing that the eye area of the first image is the most similar to the eye area of the second image. In an embodiment, the evaluation result may include information of the second image (b) corresponding to the highest area similarity score.

Besides the eye area, the comparison module 123 may respectively determine the highest area similarity scores corresponding to the other areas according to the aforementioned method, so as to generate the corresponding evaluation results. Moreover, the comparison module 123 may also calculate the overall similarity score corresponding to each of the second images according to the equation (3), and determines the highest overall similarity score to generate the evaluation result representing that the first image is the most similar to the second image with the highest overall similarity score. In an embodiment, the evaluation result may include information of the second image corresponding to the highest overall similarity score.

Referring to FIG. 2A, after the step S208 is executed to generate the evaluation result, in step S209, the processor 110 executes the output module 124 to output an inform message according to the evolution result. For example, the evaluation result includes the information of the second image corresponding to the highest overall similarity score, so that the output module 124 may output related message of the second image corresponding to the highest overall similarity score according to the evolution result. However, in another embodiment, the evaluation result may further include information of the second image corresponding to the highest area similarity score. Therefore, the output module 124 may output related message of the second image corresponding to the highest area similarity score according to the evolution result in allusion to each area of the face. For example, the second image is a face image of a celebrity, the inform message may include the highest overall similarity score, the image and the name of the celebrity corresponding to the highest overall similarity score. Moreover, the inform message may further includes the highest area similarity score corresponding to each of the areas, the image and the name of the celebrity corresponding to each of the highest area similarity scores.

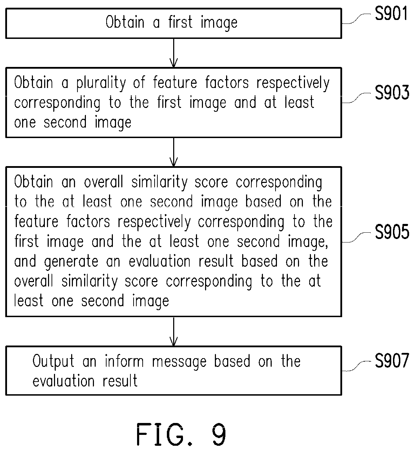

FIG. 9 is a schematic diagram of a face similarity evaluation method according to another embodiment of the invention.

Referring to FIG. 9, first, in step S901, the processor 110 executes the image obtaining module 121 to obtain a first image. Then, in step S903, the processor 110 executes the feature factor obtaining module 122 to obtain a plurality of feature factors respectively corresponding to the first image and at least one second image. Then, in step S905, the processor 110 executes the comparison module 123 to obtain an overall similarity score corresponding to the at least one second image based on the feature factors respectively corresponding to the first image and the at least one second image, and generates an evaluation result based on the overall similarity score corresponding to the at least one second image. Finally, in step S907, the processor 110 executes the output module 124 to output an inform message based on the evaluation result. The various steps of FIG. 9 have been described in detail in the aforementioned embodiments, so that detail thereof is not repeated.

In summary, in the invention, the feature factors corresponding to each of the images are obtained based on the feature points of each of the face image, and a difference between each of the feature factors is obtained according to the feature factors respectively corresponding to the two images, and an area similarity score corresponding to each area of the face is obtained according to the difference of each of the feature factors, so as to obtain the overall similarity score corresponding to the face image. In this way, the user learns a similarity degree between his own look and other people or celebrities.

## Claims

1. A face similarity evaluation method, comprising:

   obtaining a first image (S901);
   obtaining a plurality of feature factors respectively corresponding to the first image (300) and at least one second image (S903);
   obtaining an overall similarity score corresponding to the at least one second image based on the feature factors respectively corresponding to the first image (300) and the at least one second image, and generating an evaluation result based on the overall similarity score corresponding to the at least one second image (S905); and
   outputting an inform message based on the evaluation result (S907).

2. The face similarity evaluation method as claimed in claim 1, wherein the step of generating the evaluation result based on the overall similarity score corresponding to the at least one second image (S905) comprises:
   determining a highest overall similarity score from the overall similarity score corresponding to the at least one second image to generate the evaluation result.

3. The face similarity evaluation method as claimed in claim 1, wherein the first image (300) and the at least one second image respectively have at least one area,
   wherein the step of obtaining the overall similarity score corresponding to the at least one second image based on the feature factors respectively corresponding to the first image and the at least one second image (S905) comprises:

   obtaining at least one area similarity score corresponding to the at least one second image based on the feature factors respectively corresponding to the first image (300) and the at least one second image, wherein the at least one area similarity score corresponds to the at least one area; and
   obtaining the overall similarity score corresponding to the at least one second image based on the at least one area similarity score corresponding to the at least one second image.

4. The face similarity evaluation method as claimed in claim 3, further comprising:
   outputting the inform message according to the at least one area similarity score corresponding to the at least one second image.

5. The face similarity evaluation method as claimed in claim 3, wherein the feature factors comprise at least one feature factor belonging to the at least one area,
   wherein the step of obtaining the at least one area similarity score corresponding to the at least one second image based on the feature factors respectively corresponding to the first image and the at least one second image (S905) comprises:

   calculating at least one feature difference parameter corresponding to the at least one second image based on the at least one feature factor belonging to the at least one area respectively corresponding to the first image (300) and the at least one second image; and
   calculating the at least one area similarity score corresponding to the at least one second image according to the at least one feature difference parameter and at least one weight value.

6. The face similarity evaluation method as claimed in claim 3, wherein the at least one area comprises an eyebrow area (400), an eye area (500), a nose area (600), a lip area (700) and a face area (800).

7. The face similarity evaluation method as claimed in claim 1, wherein the step of obtaining the feature factors respectively corresponding to the first image (300) and the at least one second image (S903) comprises:

   executing an analyzing operation to the first image (300) to obtain a plurality of first feature factors corresponding to the first image (S203); and

obtaining a plurality of second feature factors corresponding to the at least one second image obtained through the analyzing operation of the at least one second image from a database (S205).

8. An electronic device (10), comprising:

a storage unit (120), storing a plurality of modules; and
a processor (110), coupled to the storage unit (120), and accessing and executing the modules stored in the storage unit (120), the modules comprise:

an image obtaining module (121), obtaining a first image (300);
a feature factor obtaining module (122), obtaining a plurality of feature factors respectively corresponding to the first image (300) and at least one second image;
a comparison module (123), obtaining an overall similarity score corresponding to the at least one second image based on the feature factors respectively corresponding to the first image (300) and the at least one second image, and generating an evaluation result based on the overall similarity score corresponding to the at least one second image; and
an output module (124), outputting an inform message based on the evaluation result.

9. The electronic device (10) as claimed in claim 8, wherein the operation that the comparison module (123) generates the evaluation result based on the overall similarity score corresponding to the at least one second image comprises: determining a highest overall similarity score from the overall similarity score corresponding to the at least one second image to generate the evaluation result.

10. The electronic device (10) as claimed in claim 8, wherein the first image (300) and the at least one second image respectively have at least one area, wherein the operation that the comparison module (123) obtains the overall similarity score corresponding to the at least one second image based on the feature factors respectively corresponding to the first image (300) and the at least one second image comprises:

obtaining at least one area similarity score corresponding to the at least one second image based on the feature factors respectively corresponding to the first image (300) and the at least one second image, wherein the at least one area similarity score corresponds to the at least one area; and
obtaining the overall similarity score corresponding to the at least one second image based on the at least one area similarity score corresponding to the at least one second image.

11. The electronic device (10) as claimed in claim 10, wherein the output module (124) outputs the inform message according to the at least one area similarity score corresponding to the at least one second image.

12. The electronic device (10) as claimed in claim 10, wherein the feature factors comprise at least one feature factor belonging to the at least one area, wherein the operation that the comparison module (123) obtains the at least one area similarity score corresponding to the at least one second image based on the feature factors respectively corresponding to the first image (300) and the at least one second image comprises:

calculating at least one feature difference parameter corresponding to the at least one second image based on the at least one feature factor belonging to the at least one area respectively corresponding to the first image (300) and the at least one second image; and
calculating the at least one area similarity score corresponding to the at least one second image according to the at least one feature difference parameter and at least one weight value.

13. The electronic device (10) as claimed in claim 10, wherein the at least one area comprises an eyebrow area (400), an eye area (500), a nose area (600), a lip area (700) and a face area (800).

14. The electronic device as (10) claimed in claim 8, wherein the operation that the image feature obtaining module (122) obtains the feature factors respectively corresponding to the first image (300) and the at least one second image comprises:

executing an analyzing operation to the first image (300) to obtain a plurality of first feature factors corresponding to the first image (300); and
obtaining a plurality of second feature factors corresponding to the at least one second image obtained through the analyzing operation of the at least one second image from a database.

110 — Processor

130 — Image capturing unit

Electronic device

Image obtaining module — 121

Feature factor obtaining module — 122

Comparison module — 123

Output module — 124

Storage unit — 120

— 10

FIG. 1

| Obtain a first image | S201 |

| Execute an analyzing operation to the first image to obtain a first feature factor corresponding to the first image | S203 |

| Obtain a second feature factor corresponding to each one of the second images | S205 |

| Execute a comparison operation between the first image and each of the second images according to the first feature factor and the second feature factors, so as to obtain an area similarity score corresponding to each of the second images and an overall similarity score | S207 |

| Output an inform message according to the evaluation result | S209 |

# FIG. 2A

| Obtain a second image | S221 |

| Execute an analyzing operation to the second image to obtain the second feature factor corresponding to the second image | S223 |

| Record the second feature factor corresponding to the second image in the database | S225 |

# FIG. 2B

FIG. 3

FIG. 4A

FIG. 4B

FIG. 5A

FIG. 5B

FIG. 6

FIG. 7

FIG. 8

| Obtain a first image | S901 |

↓

| Obtain a plurality of feature factors respectively corresponding to the first image and at least one second image | S903 |

↓

| Obtain an overall similarity score corresponding to the at least one second image based on the feature factors respectively corresponding to the first image and the at least one second image, and generate an evaluation result based on the overall similarity score corresponding to the at least one second image | S905 |

↓

| Output an inform message based on the evaluation result | S907 |

## FIG. 9

Europäisches
Patentamt

European
Patent Office

Office européen
des brevets

# EUROPEAN SEARCH REPORT

Application Number

EP 18 16 6083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/043897 A1 (MEYER ROBERT W [US]) 24 February 2005 (2005-02-24) * paragraph [0013]; figures 5,6 * * paragraph [0098] * | 1-14 | INV. G06K9/00 |
| X | US 2003/130035 A1 (KANARAT AMNART [US]) 10 July 2003 (2003-07-10) * paragraph [0037] - paragraph [0039]; figure 6 * | 1,7 | |
| T | BRUNELLI R ET AL: "FACE RECOGNITION: FEATURES VERSUS TEMPLATES", IEEE TRANSACTIONS ON PATTERN ANALYSIS AND MACHINE INTELLIGENCE, IEEE COMPUTER SOCIETY, USA, vol. 15, no. 10, 1 October 1993 (1993-10-01), pages 1042-1052, XP000403523, ISSN: 0162-8828, DOI: 10.1109/34.254061 * the whole document * | | |

TECHNICAL FIELDS
SEARCHED       (IPC)

G06K

The present search report has been drawn up for all claims

| Place of search | Date of completion of the search | Examiner |
|---|---|---|
| The Hague | 2 November 2018 | Meier, Ueli |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 16 6083

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2018

| Patent document cited in search report | Publication date | Patent family member(s) | Publication date |
|---|---|---|---|
| US 2005043897 A1 | 24-02-2005 | NONE | |
| US 2003130035 A1 | 10-07-2003 | NONE | |

EPO FORM P0459

For more details about this annex : see Official Journal of the European Patent Office, No. 12/82